# EUROPEAN PATENT APPLICATION

(11) **EP 1 811 418 A2**
(43) Date of publication of application: **25.07.2007**
(21) Application number: 06125679.8
(22) Date of filing: 08.12.2006
(51) Int. Cl.: G06F 21/00

(54) **Method and apparatus for re-importing content in a domain**

(30) Priority: 24.04.2006 KR 20060036819; 03.01.2006 US 755093 P
(71) Applicant: SAMSUNG ELECTRONICS CO., LTD., Suwon-si, Gyeonggi-do 442-742 (KR)
(72) Inventor: Yoon, Young-sun 511-704 Sangrok Apt, Gyoenggi-do (KR); Kim, Bong-seon 903-411 Cheongsol Maeul, Seongnam-si Gyeonggi-do (KR); Nam, Su-hyun, Seoul (KR)
(74) Representative: Clark, David James

(57) **Abstract**

A method and apparatus for protecting digital content in a digital rights management (DRM) system. The method comprises re-importing a second content file, which was imported from a first content file, as a third content file, and includes determining whether to allow the re-importing of the second content file based on a difference between a current usage bind of the content determined in an import process and an original usage bind of the content and changing a usage bind of the content from the current usage bind to the original usage bind based on the result of determination. Therefore, when the usage bind of content, which had to be a domain bound, was inevitably determined to be a device bound due to a situation at the time of a content import process, the content can be freely used in the domain bound, which is the original usage bind of the content, according to usage constraints information (UCI) of the content.

## Description

Methods and apparatus consistent with the present invention relate to protecting digital content, and more particularly, to protecting digital content in a digital rights management (DRM) system.

As the world is moving from the analog age to the digital age, more content is being created and stored in digitized forms. While copying of analog content requires much time and effort, digital content can typically be copied easily and quickly.

Also, while the quality of analog content degrades in proportion to the number of copies made, the quality of digital content is identically maintained regardless of the number of copies made. Accordingly, protection of digital content has been investigated and a variety of research projects for protection of digital content have been conducted by many companies.

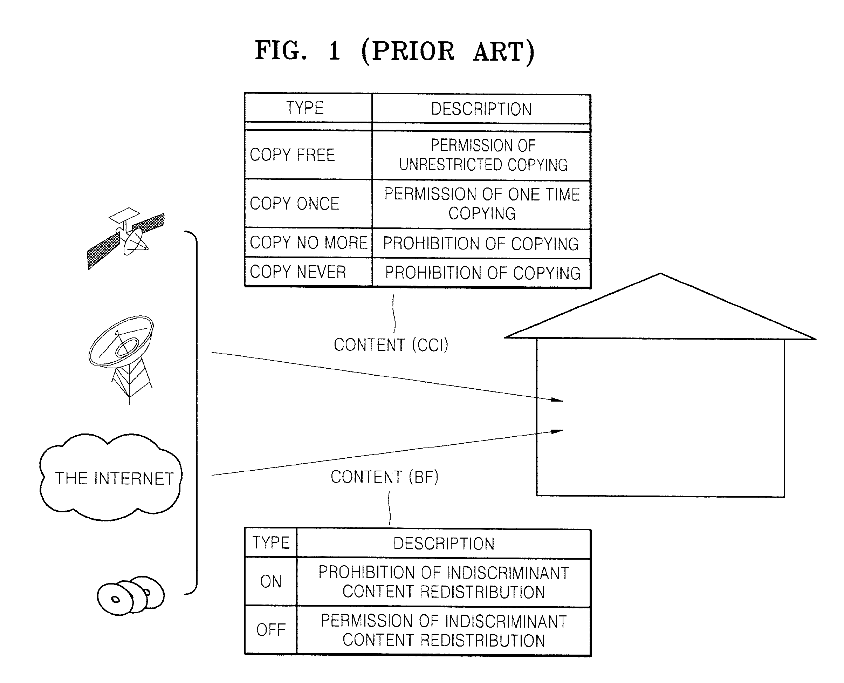

FIG. 1 illustrates a conventional digital content protection environment.

Referring to FIG. 1, in the conventional digital content protection environment, a transmission stream is received through one of a variety of broadcasting transmission channels and digital content is designed to be protected by using information included in the transmission stream.

In particular, a U.S. organization, Cable Television Laboratories, Inc. (CableLabs), specifies that copy control information (CCI) is attached to digital content in order to control copying of the content. The CCI is two-bit information to restrict the number of times digital content can be copied. The types of CCI include "copy free" (00), "copy once" (O1), "copy no more" (10) and "copy never" (11). "Copy free" indicates that copying the content is permitted without restriction. "Copy once" indicates that only one time copying is permitted. If content with the CCI indicating "copy once" is copied, the CCI of this content becomes "copy no more." "Copy never" indicates prohibition of copying the content.

Also, in order to prohibit indiscriminant redistribution of high definition (HD)-level digital content broadcast in the U.S., the U.S. Federal Communications Commission (FCC) specifies that a broadcast flag should be attached to digital content. The broadcast flag is one-bit information indicating whether or not indiscriminant redistribution of digital content is prohibited. The types of broadcast flag include broadcast flag on (1) and broadcast flag off (0). Broadcast flag on indicates that indiscriminant redistribution of digital content is not permitted, while broadcast flag off indicates that indiscriminant redistribution of the digital content is permitted.

However, since the conventional methods of protecting digital content, such as CCI and the broadcast flag, are very simple and limited in their expressions, it is difficult to protect digital content sufficiently to satisfy the needs of content users to freely use the content. In addition, with only the conventional methods of CCI and the broadcast flag, it is difficult to allow only users authorized for digital content use the content when it is being distributed, and also to prevent this content from being illegally redistributed or used by unauthorized persons.

According to a first aspect of the present invention, there is provided a method of re-importing a second content file, which was imported from a first content file, as a third content file, the method including: determining whether to allow the re-import of the second content file based on a difference between a current usage bind of the content determined in an import process and an original usage bind of the content; and changing a usage bind of the content from the current usage bind to the original usage bind based on the result of determination.

According to a second aspect of the present invention, there is provided a computer-readable recording medium on which a program for executing the method of re-importing a second content file, which was imported from a first content file, as a third content file of the first aspect of the invention is recorded.

According to a third aspect of the present invention, there is provided an apparatus for re-importing a second content file, which was imported from a first content file, as a third content file, the apparatus including: a re-import determination unit determining whether to allow the re-import of the second content file based on a difference between a current usage bind of the content determined in an import process and an original usage bind of the content; and a usage bind change unit changing a usage bind of the content from the current usage bind to the original usage bind based on the result of determination.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 illustrates a related art digital content protection environment;
FIG. 2 illustrates a digital content protection environment in which methods according to exemplary embodiments of the present invention operate;
FIG. 3 is a block diagram of a content re-import apparatus according to an exemplary embodiment of the present invention;
FIG. 4 is a table showing permission of content re-import for use in methods according to exemplary embodiments of the present invention;
FIG. 5 illustrates a usage rule table for use in methods according to exemplary embodiments of the present invention;
FIG. 6 illustrates a license format for use in methods according to exemplary embodiments of the present invention; and
FIGS. 7A and 7B are flowcharts illustrating a content re-import method according to an exemplary embodiment of the present invention.

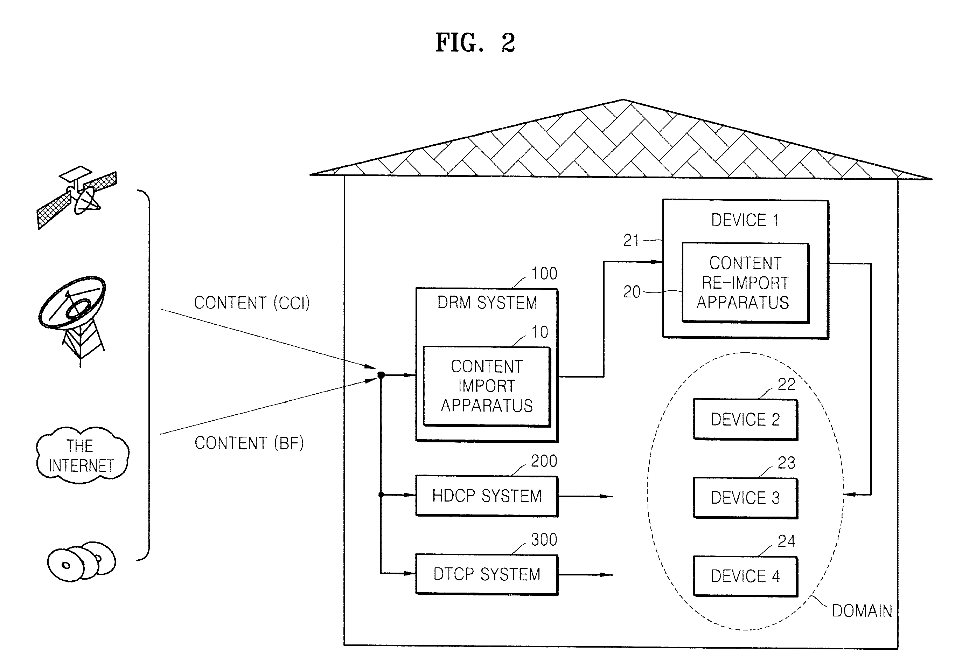

FIG. 2 illustrates a digital content protection environment in which methods according to exemplary embodiments of the present invention operate.

Referring to FIG. 2, the digital content protection environment according to the exemplary embodiment of the present invention is composed of a variety of content protection systems, such as a digital rights management (DRM) system 100, a high bandwidth digital content protection (HDCP) system 200, a digital transmission content protection (DTCP) system 300, and first through fourth devices 21-24 protected by these content protection systems.

If the first through fourth devices 21-24 are protected by corresponding content protection systems, they are included in the corresponding content protection systems as elements thereof. For example, if the first device 21 is protected by the DRM system 100, the first device 21 is included in the DRM system 100 as an element of the DRM system 100. These content protection systems may also exist as separate devices from the first through fourth devices 21-24 or loaded in any one of the first through fourth devices 21-24.

The DRM system 100 is a system for managing the rights of content received from the outside. The HDCP system 200 is a system for preventing copying of digital content output to a digital display through a high bandwidth interface, such as a digital video interface (DVI). The DTCP system 300 is a system for preventing copying of digital content transmitted through a universal serial bus (USB) complying with Institute of Electrical and Electronics Engineers (IEEE) 1394 standard. In addition to these content protection systems, other content protection systems such as a conditional access system (CAS), and a content protection for recordable media (CPRM) system, may be further included, which can be easily understood by a person skilled in the art.

Referring to FIG. 2, content included in a content file received from an external source may be protected by the DRM system 100 or by the HDCP system 200 or the DTCP system 300. For the content included in the received content file to be protected by the DRM system 100, the content file received from the external source must be imported by a content import apparatus 10 included in the DRM system 100 as a content file that complies with a rule of the DRM system 100. In other words, the DRM system 100 includes the content import apparatus 10 importing content, which used to be protected using conventional copy control information (CCI) and a broadcast flag, as content that complies with the rules of the DRM system 100. The rules of the DRM system 100 are designed to satisfy the security requirements of content producers and content providers while meeting the needs of content users to freely use the contents.

The importing of content in the exemplary embodiment involves a process in which a license for content is issued according to the rule of the DRM system 100 and the content is encrypted. That is, in the exemplary embodiment, the importing of content is a process of converting a content file that does not comply with the rule of the DRM system 100 into a content file that complies with the rule of the DRM system 100. In the exemplary embodiment, the content file is a file including digital content, and copy control information or license for the content. A person skilled in the art will understand that the term, "a content file," can also be simply called "content."

The content import apparatus 10 imports the first content file, which does not comply with the rules of the DRM system 100, as the second content file, which complies with the rules of the DRM system 100. In this process, according to the rules of the DRM system 100, the content import apparatus 10 determines a usage bind and a usage rule of content included in the first content file based on usage constraints information (UCI) included in the first content file. In other words, the content import apparatus 10 determines a usage bind of the content included in the first content file to be a device bound which limits the usage bind of the content to any one device or a domain bound which limits the usage bind of the content to all devices included in any one domain according to the rule of the DRM system 100.

A "usage bind," as used herein, essentially corresponds to a defined usage category or scope. Considered herein are two categories, the first where usage is confined to a particular device, which will be referred to as a "device bound," and a second where usage is confined to a particular domain which may include a variety of devices, which will be referred to as a "domain bound." Usage rule is a concept including usage rights, i.e., usage permission or constraints.

Examples of the UCI may include conventional copy control information and the broadcast flag. As described above, the copy control information is information to restrict the number of times digital content can be copied. The types of the copy control information include "copy free," "copy once," "copy no more" and "copy never." Also, the broadcast flag is information indicating whether or not indiscriminant redistribution of the content is prohibited. The types of the broadcast flag include broadcast flag on and broadcast flag off.

According to the rule of the DRM system 100, the content import apparatus 10 determines a usage rule of the content included in the first content file for each usage bind determined as described above based on the UCI included in the first content file. The content import apparatus 10 encrypts a content key using an encryption key corresponding to the usage bind described above and encrypts the content using the content key. The content import apparatus 10 issues a license including a content identifier (ID), an encrypted content key, a usage rule, and a license issuance time. Then, the content import apparatus 10 generates the second content file including the encrypted content and the issued license. In so doing, the content import process is completed.

For example, when the UCI included in the first content file is CCI and, in particular, when the CCI is "copy free," indicating that content can be copied without limit, the content import apparatus 10 may determine the usage bind of the content included in the first content file to be the device bound or the domain bound. However, when a domain, that is, a group of devices selected by a user, does not exist, an encryption key (hereinafter referred to as a domain key) corresponding to a domain cannot exist. In this case, the content import apparatus 10 determines the usage bind of the content included in the first content file to be the device bound although it can determine the usage bind of the content to be the domain bound.

When content whose usage bind was determined to be the domain bound by a user is to be transmitted to a device that does not belong to the domain, a content key must be encrypted using an encryption key (hereinafter referred to as a device key) corresponding to the device and transmitted accordingly such that the device can obtain the content. In this case, the content import apparatus 10 determines the usage bind of the content included in the first content file to be the device bound although it can determine the usage bind of the content to be the domain bound. In other words, the content import apparatus 10 imports the first content file as the second content file which includes a content key encrypted using the device key although it can import the first content file as the second content file which includes a content key encrypted using the domain key.

When the usage bind of content was determined to be the device bound although it could be determined to be the domain bound in the import process performed by the content import apparatus 10, a content re-import apparatus 20 loaded in the first device 21 corrects the usage bind of the content to the original domain bound. In other words, a content re-import in the exemplary embodiment denotes a process of issuing a license for content and encrypting the content key newly such that the usage bind of the content can correct to the original domain bound according to the rule of the DRM system 100 and encrypt the content. Specifically, the content re-import in the exemplary embodiment denotes a process of converting the second content file which includes a license issued according to the device bound and a content key encrypted with a device key according to the device bound into a third content file which includes a license issued according to the domain bound and a content key encrypted with a domain key according to the domain bound.

Therefore, in the exemplary embodiment, while the first content file does not comply with the rule of the DRM system 100, the second content file and the third content file comply with the rule of the DRM system 100. It will be understood by those of ordinary skill in the art that the exemplary embodiment can be applied to other cases where the usage bind of the content may be determined to be the device bound although it can be determined to be the domain bound.

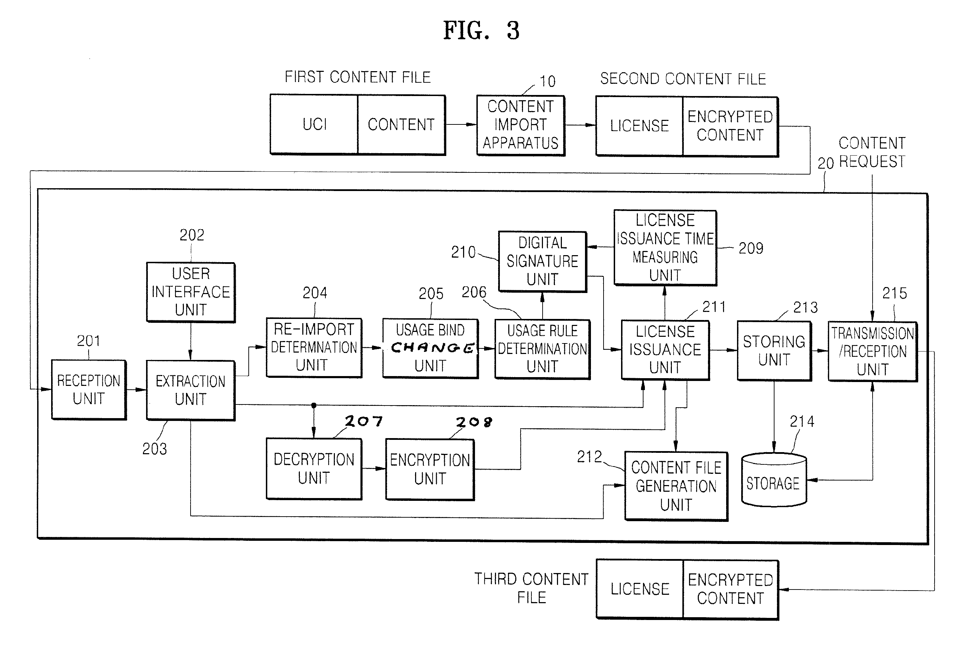

FIG. 3 is a block diagram of a content re-import apparatus 20 according to an exemplary embodiment of the present invention. Referring to FIG. 3, the content re-import apparatus 20 includes a reception unit 201, a user interface 202, an extraction unit 203, a re-import determination unit 204, a usage bind change unit 205, a usage rule determination unit 206, a decryption unit 207, an encryption unit 208, a license issuance time measuring unit 209, a digital signature unit 210, a license issuance unit 211, a content file generation unit 212, a storing unit 213, a storage 214, and a transmission/reception unit 215.

The reception unit 201 receives from the content import apparatus 10 the second content file, which was imported by the content import apparatus 10 as the first content file,. In other words, the reception unit 201 receives the second content file which complies with the rule of the DRM system 100 and which was imported as the first content file that does not comply with the rule of the DRM system 100.

The user interface 202 receives a content re-import command from a user.

When the user interface 202 receives the content re-import command from the user, the extraction unit 203 extracts the encrypted content and the license for the content from the second content file received by the reception unit 201. In addition, the extraction unit 203 may extract information such as a content ID, an encrypted content key, an import type of the content, a usage rule with a digital signature, and a license issuance time. In this case, the import type of the content denotes a value determined in the import process performed by the content import apparatus 10 and information indicating which usage bind should originally be determined for the content.

The content import apparatus 10 determines an import type based on the UCI included in the first content file, for example, the CCI or the broadcast flag. Values of the import type include user-specific or device-specific. In other words, when the import type of content is user-specific, the usage bind of the content should be the domain bound specified by a user. When the import type of the content is device-specific, the usage bind of the content should be the device bound.

The re-import determination unit 204 recognizes the difference between a current usage bind of the encrypted content included in the second content file and the original usage bind of the encrypted content based on the import type which was extracted by the extraction unit 203 and determines whether to allow the re-import of the second content file as the third content file. In this case, the current usage bind of the content denotes a usage bind determined in the process of importing the first content file as the second content file using the content import apparatus 10. In other words, when a content key used for encryption of the encrypted content included in the second content file is encrypted using a device key, the current usage bind of the encrypted content is the device bound.

The original usage bind of the content denotes a usage bind determined based on the UCI included in the first content file, for example, the CCI or the broadcast flag. In other words, when a value of an import type extracted by the extraction unit 203 is user-specific, the usage bind of the content should be the domain bound specified by a user. When the value of the import type extracted by the extraction unit 203 is device-specific, the usage bind of the content should be the device bound.

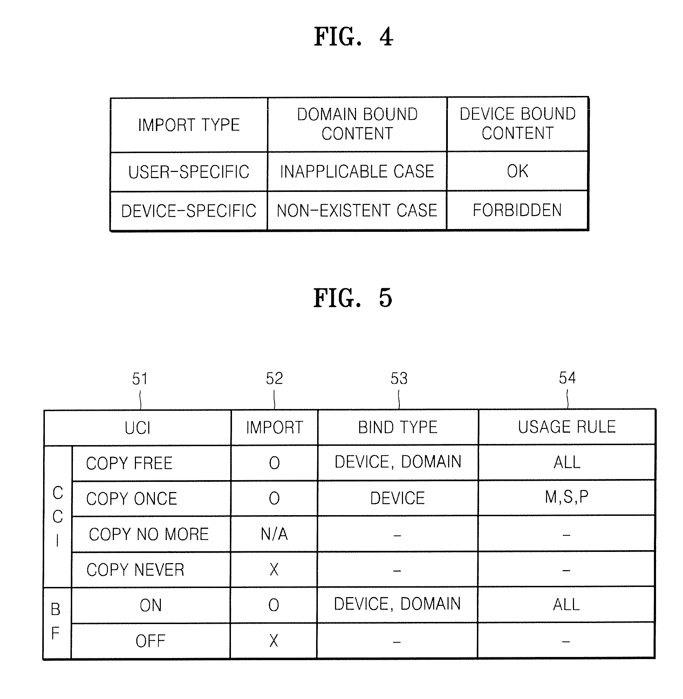

FIG. 4 is a table showing permission of content re-import for use with embodiments of the present invention.

Referring to FIG. 4, when the import type of content is user-specific and the current usage bind of the content is the domain bound, the content re-import according to the exemplary embodiment cannot be applied. That is because the current usage bind of the content is the domain bound and, thus, there is no need to change the usage bind of the content back to the domain bound. In addition, when the import type of the content is user-specific and the current usage bind of the content is the device bound, the content re-import according to the exemplary embodiment cannot be applied.

Moreover, a case where the import type of the content is device-specific and the current usage bind of the content is the domain bound cannot exist. When the import type of the content is device-specific and the current usage bind of the content is device bound, the content re-import according to the exemplary embodiment is forbidden.

In other words, the re-import determination unit 204 allows the re-import of the second content file as the third content file only when the current usage bind of content is the device bound and the original usage bind of the content is the domain bound. Specifically, the re-import determination unit 204 allows the re-import of the second content file as the third content file only when the usage bind of the content determined based on the UCI included in the first content file is the device bound and a value of the import type extracted by the extraction unit 203 is user-specific.

The usage bind change unit 205 changes the usage bind of the content extracted by the extraction unit 203 from the current usage bind to the original usage bind of the content based on the result of determination by the re-import determination unit 204. More specifically, when the re-import determination unit 204 determines to allow the re-import of the content, the usage bind change unit 205 changes the usage bind of the content extracted by the extraction unit 203 from the device bound, which was determined in the process of importing the first content file as the second content file, to the domain bound determined based on the UCI included in the first content file.

The usage rule determination unit 206 determines a usage rule of the content in a usage bind changed by the usage bind change unit 205 according to the rule of the DRM system 100. In other words, when the usage bind change unit 205 changes the usage bind of the content from the device bound to the domain bound, the usage rule determination unit 206 determines a usage rule of the content in any one domain. Since the rule of the DRM system 10 is designed to satisfy the security requirements of content producers and content providers in any one domain while meeting the needs of content users to freely use contents, the usage rule determination unit 206 determines the usage rule of the content accordingly.

FIG. 5 illustrates a usage rule table according to an exemplary embodiment of the present invention. Referring to FIG. 5, the usage rule table is composed of an UCI field 51, an import field 52, a bind type field 53, and a usage rule field 54.

The UCI is recorded in the UCI field 51. A value indicating whether content with the UCI recorded in the UCI field 51 can be imported is recorded in the import field 52. A usage bind based on the UCI, which is recorded in the UCI field 51, is recorded in the bind type field 53. A usage rule based on the UCI, which is recorded in the UCI field 51 for each usage bind recorded in the bind type field 53, is recorded in the usage rule field 54.

Among values recorded in the usage rule field 54, "all" indicates that all types of usages of content are permitted. In the usage rule field 54, the value "M" indicates moving of content. The moving of the content means that the content stored in any one device is deleted or the usage of the content is prohibited when the instant the content is stored in another device. Also, among values recorded in the usage rule field 54, the value "S" indicates streaming of content. The streaming of the content means that the content stored in any one device is temporarily output to another device but the content is continuously stored in the original device. Lastly, in the usage rule field 54, the value "P" indicates playing of the content. The playing of the content means that any one device plays the content.

Since "copy free" indicates that unrestricted copying of content is permitted, if the UCI is "copy free", device and domain are recorded in the bound type field 53 and "all" is recorded in the usage rule field 54. Since "copy once" indicates that only one time copying of content is permitted, if the UCI is "copy once," device is recorded in the bound type field 53 and "M, S, and P" are recorded in the usage rule field 54.

In addition to the moving, streaming and playing, examples of using content includes copying content. The copying of content means that content imported according to the exemplary embodiment of the present invention is copied. However, in order for the content import apparatus 10 to import the content, copying of the content is required as a prerequisite and as a result, if the content imported according to the exemplary embodiment is copied, the frequency of copying the content becomes twice.

Accordingly, though the content import apparatus 10 can import content with the UCI indicating "copy once", the content import apparatus 10 cannot permit copying of the content imported according to the exemplary embodiment. This is the reason why only "M, S, and P" are recorded in the usage rule field 54 when the UCI is "copy once."

Since broadcast flag on indicates that indiscriminant redistribution of content is not permitted, if the broadcast flag is broadcast flag on, device and domain are recorded in the bound type field 53 and "all" is recorded in the usage rule field 54.

Any type of usage in a device bound, including copying of content, complies with the prohibition of indiscriminant redistribution of the content, and since a domain bound is a specified area that can be recognized by a user, any type of usage in the domain bound, including copying of the content, complies with the prohibition of indiscriminant redistribution of the content.

As described above, the usage rule of content may be different when the usage bind of the content is the device bound and when the usage bind of the content is the domain bind.

Therefore, the usage bind determination unit 206 must determine a usage rule of content in any one domain although the usage rule of the content in any one device has already been determined. Referring to the usage rule table of FIG. 5, when the usage bind of content can be determined to be either the device bound or the device bound, all kinds of usage rules can be used for the content regardless of the usage bind of the content, which is indicated by "all." Therefore, if the usage rule determination unit 206 determines a usage rule of content in any one domain based on the usage rule table of FIG. 5, the usage rule of the content may not be changed.

The decryption unit 207 decrypts the encrypted content key extracted by the extraction unit 203 using an encryption key, i.e., a device key, corresponding to any one device, which also corresponds to the current usage bind of content, and restores the content key used to encrypt the content. For example, when a public/private key encryption method is used, a device key is a private key. When a secret key encryption method is used, the device key is a secret key.

The encryption unit 208 encrypts an encryption key corresponding to any one domain that also corresponds to the original usage bind of content. In other words, the encryption unit 208 encrypts the content key restored by the decryption unit with the domain key. In the exemplary embodiment, the domain key is periodically update by a management device which manages a domain and may be distributed to devices within the domain. When a domain key retained by the content re-import apparatus 20 is not the latest, the content re-import apparatus 20 requests the domain management device for a latest domain key and obtains the latest domain key accordingly.

If the encryption by the encryption unit 208 is finished and preparation of issuing a license for the content is finished, the license issuance time measuring unit 209 measures a time to issue a license. By inserting the thus measured license issuance time into the license, at the time the license is issued only an authorized device among devices receiving the content imported by the content import apparatus 10 can use the content. However, if the license issuance time is faked, the security requirement of content owners, content providers and service providers cannot be satisfied and as a result, the content protection function of the DRM system 100 cannot operate correctly. Accordingly, a secure time that cannot be manipulated arbitrarily should be used for the license issuance time.

The digital signature unit 210 electronically signs the usage rule determined by the usage rule determination unit 206 and the license issuance time measured by the license issuance time measuring unit 209 according to the rule of the DRM system 100. Generally, a digital signature is used to guarantee that a document or message is not falsified. If the usage rule determined by the usage rule determination unit 206 and the license issuance time measured by the license issuance time measuring unit 209 are falsified, the security requirement of content owners, content providers and service providers cannot be satisfied and as a result, the content protection function of the DRM system 100 cannot operate correctly.

The license issuance unit 211 generates and issues a license including the content ID extracted by the extraction unit 203, the content key encrypted by the encryption unit 208, and the usage rule and license issuance time electronically signed by the digital signature unit 210.

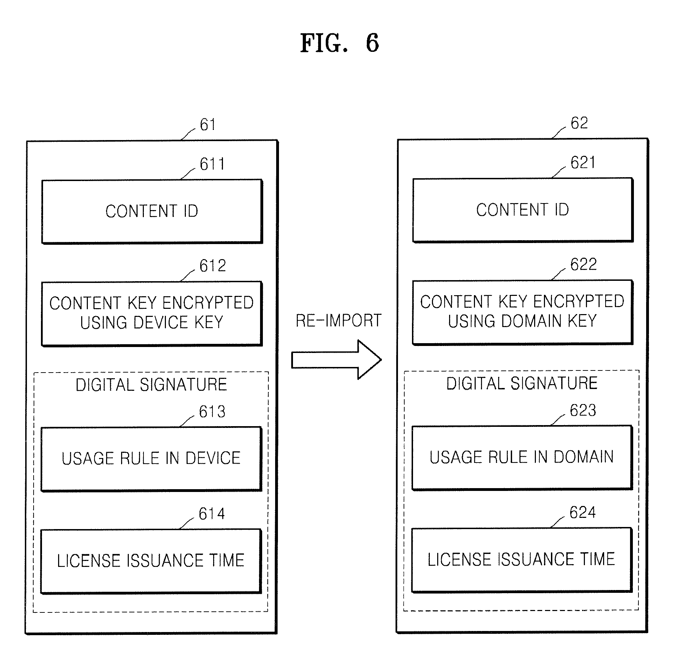

FIG. 6 illustrates a license format for use with exemplary embodiments of the present invention.

Referring to FIG. 6, licenses 61 and 62 according to the exemplary embodiments include content IDs 611 and 621, encrypted content keys 612 and 622, and electronically signed license issuances times 614 and 624, respectively. The license 61 generated in the import process of the content import apparatus 10 includes the content ID 611, the content key 612 encrypted using the device key, the electronically signed usage rule 613, and the electronically signed license issuance time 614. The license 62 generated in the re-import process of the content re-import apparatus 20 includes the content ID 621, the content key 622 encrypted using the device key, and the electronically signed usage rule 623, and the electronically signed license issuance time 624.

A device that receives the content imported by the content import apparatus 10 or re-imported by the content re-import apparatus 20 can identify the content with reference to the content IDs 611 and 621 of the licenses 61 and 62 illustrated in FIG. 6. Also, in order to obtain the identified content, the device that receives the content imported by the content import apparatus 10 or re-imported by the content re-import apparatus 20 attempts to decrypt the encrypted content keys 612 and 622 of the licenses 61 and 62 illustrated in FIG. 6.

When content is imported by the content import apparatus 10, a device having the device key used to decrypt the encrypted content key 612 can decrypt the encrypted content key 612. However, when content is re-imported by the content re-import apparatus 20, a plurality of devices having the domain key used to decrypt the encrypted content key 622 can decrypt the encrypted content key 622. Also, the device receiving the content imported by the content import apparatus 10 or re-imported by the content re-import apparatus 20 decrypts the content imported or re-imported by the content import apparatus 10 or the content re-import apparatus 20. This is because the content imported or re-imported by the content import apparatus 10 or the content re-import apparatus 20 is in an encrypted form as described above.

Also, the device receiving the content imported by the content import apparatus 10 or re-imported by the content re-import apparatus 20 determines whether or not the electronically signed usage rule 613 or 623 and the license issuance time 614 or 624 of the license 61 or 62 illustrated in FIG. 6 is falsified and, based on the usage rule 613 or 623 and the license issuance time 614 or 624, determines whether or not the user is authorized to use the content. If the device determines that the electronically signed usage rule 613 or 623 is not falsified and the user is authorized to use the content, the device receiving the content imported by the content import apparatus 10 or re-imported by the content re-import apparatus 20 uses the content according to the usage rule 613 or 623 included in the license 61 or 62 illustrated in FIG. 6. Accordingly, the security requirements of content producers and content providers can be satisfied while the needs of content users to freely use the content are met more fully.

When content is imported by the content import apparatus 10, a device having the device key used to decrypt an encrypted content key could obtain the content. However, according to the exemplary embodiment, when content is re-imported by the content re-import apparatus 20, a plurality of devices having the domain key used to decrypt an encrypted content key can obtain the content. In other words, when the usage bind of content was inevitably determined to be the device bound due to a situation at the time of content import, the content can be freely used in the domain bound, which is the original usage bind of the content according to the UCI of the content, through the encryption and license issuance processes.

The content file generation unit 212 generates a content file complying with the usage rule determined by the usage rule determination unit 206 according to the rule of the DRM system 100. This is to allow the device receiving the content re-imported by the content re-import apparatus 20 to use the content complying with the usage rule determined by the usage rule determination unit 206. As described above, the usage rule determined by the usage rule determination unit 206 is inserted into the license issued by the license issuance unit 211. That is, the content file generation unit 212 generates a content file including the license issued by the license issuance unit 211 and the content encrypted by the encryption unit 208. However, the license issued by the license issuance unit 211 and the content encrypted by the encryption unit 208 may be packaged as one unit or as separate units.

The storing unit 213 stores the content file generated by the content file generation unit 212 in the storage 214.

If a request from any one of the first through fourth devices 21-24 illustrated in FIG. 2 to transmit the content to the device is received, the transmission/reception unit 215 transmits the content file stored in the storage 214 to this device. The transmission/reception unit 215 may transmit the content file in an arbitrary method that the device supports. For example, the content may be transmitted through a storage medium, such as a secure digital (SD) card, or according to a transmission protocol, such as a real-time transport protocol (RTP).

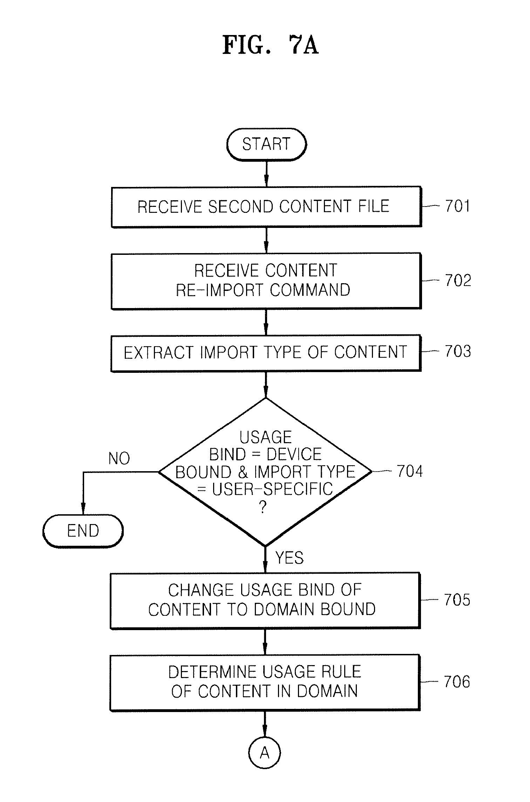

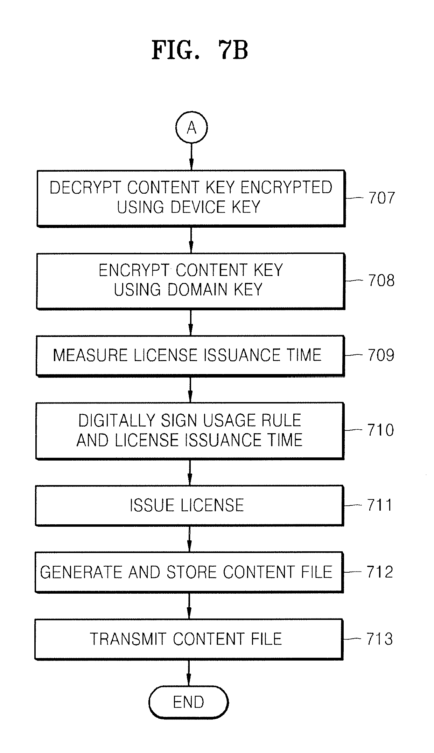

FIGS. 7A and 7B are flowcharts illustrating a content re-import method according to an exemplary embodiment of the present invention.

Referring to FIGS. 7A and 7B, the content re-import method according to the exemplary embodiment is composed of operations processed in a time series in the content re-import apparatus 20 illustrated in FIG. 3. Accordingly, the explanation described above in relation to the content re-import apparatus 20 illustrated in FIG. 3, though it may be omitted below, is also applied to the content re-import method according to the exemplary embodiment.

In operation 701, the content re-import apparatus 20 receives from the content import apparatus 10 the second content file imported by the content import apparatus 10 from the first content file.

In operation 702, the content re-import apparatus 20 receives a content re-import command from a user.

In operation 703, the content re-import apparatus 20 extracts an encrypted content and a license for the content from the second content file received in operation 701 and extracts from the license an ID of the content, an encrypted content key, a digitally signed import type of the content, an electronically signed usage rule, and an electronically signed license issuance time.

In operation 704, the content re-import apparatus 20 recognizes the difference between a current usage bind of the encrypted content included in the second content file and the original usage bind of the encrypted content based on the import type which was extracted by the extraction unit 203 and determines whether to allow the re-import of the second content file as the third content file.

In other words, in operation 704, the content re-import apparatus 20 allows the re-import of the second content file as the third content file when the usage bind of the content determined based on the UCI included in the first content file is the device bound and when a value of the import type extracted in operation 703 is user-specific. When the content re-import apparatus 20 determines to allow the re-import of the content, operation 705 is performed. When the content re-import apparatus 20 determines not to allow the re-import of the content, operation 705 and its subsequent operations are not performed.

In operation 705, the content re-import apparatus 20 changes the usage bind of the content extracted in operation 703 from the current usage bind of the content to the original usage bind of the content. More specifically, the content re-import apparatus 20 changes the usage bind of the content extracted in operation 703 from the device bound, which was determined in the process of importing the first content file as the second content file, to the domain bound determined based on the UCI included in the first content file.

In operation 706, the content re-import apparatus 20 determines the usage rule of the content in the usage bind changed in operation 705 according to the rule of the DRM system 100. In other words, when the usage bind of the content is changed from the device bind to the domain bind in operation 705, the content re-import apparatus 20 determined a usage rule of the content in any one domain in operation 706.

In operation 707, the content re-import apparatus 20 decrypts the encrypted content key extracted in operation 703 using an encryption key, i.e., a device key, corresponding to any one device, which also corresponds to the current usage bind of the content and thus restores the content key used to encrypt the content.

In operation 708, the content re-import apparatus 20 encrypts the content key restored in operation 707 using an encryption key, i.e., the domain key, corresponding to any one domain that also corresponds to the original usage bind of the content.

When the encryption operation is completed in operation 708 and a license for the content can be issued, the content re-import apparatus 20 measures a time when the license will be issued in operation 709.

In operation 710, the content re-import apparatus 20 electronically signs the usage rule determined in operation 706 and the license issuance time measured in operation 709 according to the rule of the DRM system 100.

In operation 711, the content re-import apparatus 20 generates and issues a license which includes the content ID extracted in operation 703 according to the rule of the DRM system 100, the content key encrypted in operation 708, and the usage rule and license issuance time electronically signed in operation 710.

In operation 712, the content re-import apparatus 20 generates a content file including the license issued in operation 711, the encrypted content extracted in operation703 and stores the generated content file in the storage 214.

In operation 713, when receiving a request for the content from any one of the devices 22 through 24, the content re-import apparatus 20 transmits the content file stored in the storage 214 to the device.

Embodiments of the present invention suggest a content re-import method which changes a usage bind of content to a domain bound when a current usage bind of the content determined in a content import process is a device bound. Therefore, when the usage bind of content, which had to be the domain bound, was inevitably determined to the device bound due to a situation at the time of the content import process, the content can be freely used in the domain bound, which is the original usage bind of the content, according to UCI of the content.

In other words, according to the exemplary embodiment of the present invention, when the usage bind of content, which had to be the domain bound, was inevitably determined to be the device bound due to a situation at the time of the content import process, a content re-import process in which a usage rule of the content in a domain is determined and the content is encrypted using a domain key is performed. Thus, the content can be freely used in the domain bound, which is the original usage bind of the content, according to UCI of the content.

The exemplary embodiments of the present invention can be written as computer programs stored on a computer-readable recording medium and can be implemented in general-use digital computers that execute the programs using a computer-readable recording medium. In addition, a data structure used in the exemplary embodiments of the present invention can be recorded on the computer-readable recording medium in various ways.

Examples of the computer-readable recording medium include magnetic storage media (e.g., read-only memory (ROM), floppy disks, or DVDs), optical recording media (e.g., CD-ROMs or DVDs), and carrier waves (such as data transmission through the Internet).

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of re-importing a second content file, which was imported from a first content file, as a third content file, the method comprising:
determining whether to allow re-importing of the second content file based on a difference between a current usage bind of the content determined in an import process and an original usage bind of the content; and
changing a usage bind of the content from the current usage bind to the original usage bind based on a result of the determination.

2. The method of claim 1, wherein the determining of whether to allow the re-import comprises allowing the re-importing if the current usage bind of the content is a device bound which limits the usage bind of the content to a device and the original usage bind of the content is a domain bound which limits the usage bind of the content to all devices in a domain.

3. The method of claim 1 or 2, further comprising extracting an import type of the content indicating which usage bind should originally be determined for the content, from a license for the content, and the determining of whether to allow the re-importing comprises recognizing the difference based on the extracted import type of the content and determining whether to allow the re-importing based on the recognized difference.

4. The method of claim 3, wherein the determining of whether to allow the re-importing comprises allowing the re-importing if the current usage bind of the content is the device bound and the import type of the content should be user specified which indicates that the usage bound of the content should be a domain bound.

5. The method of any one of claims 1-4, further comprising: determining a usage rule of the content in the changed usage bind; and
issuing a license including the determined usage rule.

6. The method of any one of claims 1-5, further comprising:
restoring a content key used to encrypt the content by decrypting an encrypted content key included in the second content file using an encryption key corresponding to the current usage bind; and
encrypting the restored content key using an encryption key corresponding to the original usage bind.

7. The method of any one of claims 1-6, wherein the original usage bind is determined based on usage constraints information included in the first content file.

8. The method of any one of claims 1-7, wherein the first content file does not comply with a predetermined rule of a digital rights management system, and the second and third content files comply with the predetermined rule of the digital rights management system.

9. A computer-readable recording medium on which a program for executing a method of re-importing a second content file, which was imported from a first content file, as a third content file is recorded, the method comprising:
determining whether to allow re-importing of the second content file based on a difference between a current usage bind of the content determined in an import process and an original usage bind of the content; and
changing a usage bind of the content from the current usage bind to the original usage bind based on a result of determination.

10. An apparatus for re-importing a second content file, which was imported from a first content file, as a third content file, the apparatus comprising:
a re-importing determination unit (204) which determines whether to allow re-importing of the second content file based on a difference between a current usage bind of content determined in an import process and an original usage bind of the content; and
a usage bind change unit (205) which changes a usage bind of the content from the current usage bind to the original usage bind based on a result of determination by the re-importing determination unit.

11. The apparatus of claim 10, wherein the re-importing determination unit (204) allows the re-importing if the current usage bind of the content is a device bound which limits the usage bind of the content to a device and the original usage bind of the content is a domain bound which limits the usage bind of the content to all devices in a domain.

12. The apparatus of claim 10 or 11, further comprising an extraction unit (203) extracting an import type of the content indicating which usage bind should originally be determined for the content, from a license for the content, and the re-importing determination unit recognizes a difference based on the extracted import type of the content and determines whether to allow the re-importing based on the recognized difference.

13. The apparatus of claim 10, 11 or 12, wherein the re-importing determination unit (204) allows the re-importing if the current usage bind of the content is the device bound and the import type of the content indicates that the usage bind of the content should be a domain bound specified by a user.

14. The apparatus of claim 10, 11, 12 or 13 further comprising:
a usage rule determination unit (206) which determines a usage rule of the content in the changed usage bind; and
a license issuance unit (211) which issues a license including the determined usage rule.

15. The apparatus of any one of claims 10-14, further comprising:
a decryption unit (207) which restores a content key used to encrypt the content by decrypting an encrypted content key included in the second content file using an encryption key corresponding to the current usage bind; and
an encrypting unit (208) which encrypts the restored content key using an encryption key corresponding to the original usage bind.

16. The apparatus of any one of claims 10-15, wherein the original usage bind is determined based on usage constraints information included in the first content file.

17. The apparatus of any one of claims 10-16, wherein the first content file does not comply with a predetermined rule of a digital rights management system, and the second and third content files comply with the predetermined rule of the digital rights management system.
